(19) Europäisches Patentamt
European Patent Office
Office européen des brevets

(11) **EP 2 517 076 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **10809267.7**

(22) Anmeldetag: **24.12.2010**

(51) Int Cl.:
***H05B 39/04*** (2006.01)

(86) Internationale Anmeldenummer:
**PCT/DE2010/001521**

(87) Internationale Veröffentlichungsnummer:
**WO 2011/076197 (30.06.2011 Gazette 2011/26)**

(54) **ELEKTRISCHE SCHALTUNG ZUM SCHALTEN UND/ODER DIMMEN VON LASTEN**

ELECTRICAL CIRCUIT FOR SWITCHING AND/OR DIMMING LOADS

CIRCUIT ÉLECTRIQUE POUR COMMUTER ET/OU FAIRE VARIER DES CHARGES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.12.2009 DE 102009060346**

(43) Veröffentlichungstag der Anmeldung:
**31.10.2012 Patentblatt 2012/44**

(73) Patentinhaber: **Merten GmbH**
**51674 Wiehl (DE)**

(72) Erfinder:
• **JACOB, Lothar**
**51597 Morsbach (DE)**
• **SCHLECHTINGEN, Peter**
**51597 Morsbach (DE)**
• **BECKER, Jürgen**
**51645 Gummersbach (DE)**
• **BRESLAWSKI, Dirk**
**51570 Windeck (DE)**

(56) Entgegenhaltungen:
EP-A1- 0 530 603      DE-C1- 19 538 368
US-A- 4 513 341       US-A1- 2008 198 526

**Beschreibung**

Die Erfindung betrifft eine elektrische Schaltung zum Schalten und/oder Dimmen von Lasten nach dem Oberbegriff des Patentanspruches 1.

Im Rahmen der Gebäudeinstallationstechnik existieren verschiedene elektrische Installationssysteme, um die Energieversorgung von elektrischen Lasten zu steuern. Bei einem weit verbreiteten Installationssystem werden in der elektrischen Versorgungsleitung von Lasten Installationsgeräte angeordnet, über die die Lasten direkt und nach unterschiedlichsten Kriterien manuell oder automatisch ansteuerbar sind. In den Installationsgeräten können elektrische Schaltungen angeordnet sein, die zum Schalten oder Dimmen von Lasten (z. B. Glühbirnen und anderen Leuchtmitteln) in Wechselspannungsnetzen dienen. Eine Betätigung einer Bediensensorik wird in dem Installationsgerät durch ein Schaltelement und durch mit dem Schaltelement funktional verbundenen elektronischen Bauteilen in einen entsprechend generierten Spannungspegel für die Last umgesetzt.

Derartige Schaltungen müssen funktional so ausgelegt werden, dass periphere Wechselwirkungen unterbunden werden können. Diese Anforderung ist als elektromagnetische Verträglichkeit bekannt. Einerseits ist dabei eine hinreichende Entstörung notwendig, um den Betrieb in der Umgebung befindlicher elektrischer Geräte nicht zu beeinflussen. Andererseits ist es erstrebenswert, die empfindlichen Bauteile solcher Schaltungen vor elektrischen Unregelmäßigkelten (Spitzen) und Störgrößen zu schützen. Derartige Schaftungen sind beispielsweise aus der DE 195 38 368 C1 bekannt. Die Erfüllung beider Forderungen ist aufwendig und führt zu einer komplexen, oft platzintensiven Schaltungsarchitektur.

Die Aufgabe der vorliegenden Erfindung besteht darin, eine elektrische Schaltung zum Schalten und/oder Dimmen von Lasten zu schaffen, die zuverlässig periphere Wechselwirkungen unterbindet und deren Schaltungsarchitektur vereinfacht wird.

Gelöst wird diese Aufgabe durch die im Patentanspruch 1 angegebenen Merkmale. Vorteilhafte Ausgestaltungen ergeben sich aus der Beschreibung, den Zeichnungen und den Unteransprüchen.

Die Erfindung gemäß dem Patentanspruch 1 weist den Vorteil auf, dass eine komfortable und zuverlässige Schaltung zum Schalten und/oder Dimmen von Lasten in Wechselspannungsnetzen geschaffen worden ist, die bei gleichzeitig verbesserter Schaltungsarchitektur sowohl die Beeinflussung externer Geräte minimiert als auch gegen externe Einflüsse geschützt ist. Einerseits können geforderte Kennwerte der Funkstörspannung gewährleistet werden und andererseits erfolgt ein Schutz von Schaltungsbauteilen, insbesondere von Transistoren, gegen Schädigung durch Überspannung, Überstrom, Kurzschluss usw.

Bei Schaltvorgängen können die normativ geforderten Kennwerte zur Funkstörspannung zuverlässig eingehalten werden, wobei durch vorteilhafte schaltungstechnische Maßnahmen die Schaltungsparameter und die Schaltungsarchitektur verbessert werden können. Die Flankensteilheit eines Schaltimpulses als wesentliche Einflussgröße für eine Funkstörspannung kann optimiert werden, wobei zusätzlich Eigenverluste bzw. Eigenerwärmung eines Schaltelementes verringert werden.

Zur Impulsformung erfolgt die Ansteuerung von Schaltelementen, in Form von Transistoren, über ein RC-Netzwerk mit einem Kondensator (Miller-Schaltung) parallel zur sehr stark spannungsabhängigen Gate-Drain-Strecke von Transistoren. Dadurch kann der Einfluss der stark schwankenden Gate-Drain-Kapazität auf die Flankensteilheit verringert werden, so dass eine reduzierte Flankensteilheit die Funkstörspannung unter die erlaubten Grenzwerte absenkt. Ein zusätzlicher, parallel zur Schaltung angeordneter Kondensator, der voluminös ist und beim Schalten zusätzliche Verluste in den Schaltelementen erzeugt, wird somit überflüssig.

Die elektrischen Bauelemente der Schaltung können vorteilhaft gegen Überspannung und Überstrom geschützt werden. Zum Schutz des Transistors bei Überspannung im ausgeschalteten Zustand der Last eignen sich die üblichen Schutzelemente, wie ein Varistor, der zur Schaltung parallel angeordnet ist und die Energie in ein externes Element ableitet. Des weiteren kann durch ein Bauelement, wie eine Z-Diode, die Gate-Source-Strecke des Transistors gegen positive wie negative Spannungsspitzen geschützt werden. Des weiteren kann eine Diode bei schnellen positiven Störflanken auf dem Netz das Aufsteuern des Transistors durch Klemmung auf einen zusätzlichen Kondensator verhindern.

Im Falle eines Überstromes im eingeschalteten Zustand der Last dient üblicherweise ein Stromfühlerwiderstand in Verbindung mit einem Komparator zur Abschaltung des Transistors bei Überschreitung eines Schwellwertes. Angesichts reduzierter, maximal zulässiger Impulsverlustleistung (10kW) von Transistoren sind die üblichen Abschaltungen über Komparatoren oder Prozessoren aufgrund der zu langsamen Reaktionszeiten nicht mehr einsetzbar.

Wichtig ist die Möglichkeit, den Transistor innerhalb weniger Mikrosekunden abschalten zu können. Erfindungsgemäß wird dabei der zeitliche Ver lauf des Impulswärmewiderstandes (thermische Zeitkonstante) des Transistors nachgebildet So kann die auftretende Verlustleistung gemessen und der Transistor in Abhängigkeit von der aufgenommenen Energiemenge zeitlich verzögert abgeschaltet werden. Dadurch bedingt kann der Transistor bei hohen Strömen und hoher Spannung mit resultierender hoher Verlustleistung schnellst möglich abgeschaltet werden. Hingegen ist bei hohen Strömen im bereits durchgeschalteten Transistor mit niedriger Verlustleistung eine verlängerte Abschaltung akzeptabel.

Hierzu kann ein Multiplizierer, ein RC-Netzwerk und ein Komparator (Referenzwert) benutzt werden. Dabei wird eine Spannungsinformation erzeugt und mit einer Strominformation an einem ersten Widerstand multipliziert. Diese Information über die momentane Verlustleistung kann einer Komparator- und Triggerstufe zugeführt werden, die bei Überschreitung einer Schwellspannung den Transistor sperrt. Der Multiplizierer kann noch durch eine Schaltung ergänzt werden, die den Strom bei niedrigen Spannungen auf für den Transistor erlaubte Werte begrenzt.

Vorteilhafterweise kann eine Annäherung der Abschaltbedingungen durch ein lineares Widerstands-Netzwerk und einen zusätzlicher Schutz durch eine temperaturabhängige Abschaltschwelle erzeugt werden. Um den Aufwand bei der Hardware gering zu halten, wird die Nachbildung des Impulswärmewiderstandes auf die Modellierung der sehr kurzen Zeiten im Bereich einiger bis einiger hundert $\mu$s beschränkt. Dieses Verfahren ist einfacher, weil es den aufwendigen Multiplizierer spart, und vorteilhaft, weil es gleichzeitig bei kleinen Spannungen den Strom nicht beliebig groß werden lässt.

Eine Spannungsinformation kann dabei durch einen Widerstandsteiler erzeugt und mit einer Strominformation an einem ersten Widerstand addiert werden. Diese Information kann nach der Filterung durch einen Kondensator einer Komparator- und Triggerstufe zugeführt werden, die bei Überschreitung einer Schwellspannung den Transistor sperrt. Vorteilhaft ist die Temperaturabhängigkeit der Basis-Emitter-Schwellspannung, die die Abschaltung bei höheren Umgebungstemperaturen zu niedrigen Strömen hin verschiebt.

Obwohl der Transistor bei fortbestehender Störung auch bei wiederholtem Einschalten gegen Zerstörung geschützt ist, steigt die mittlere Verlustleistung über die Verlustleistung im Normalbetrieb an, und der Transistor kann durch die übergeordnete Steuerung (Mikroprozessor des Dimmers) abgeschaltet und/oder mit einem größeren Tastverhältnis (z. B. alle 100ms) eingeschaltet werden.

Vorteilhafte Anwendungsbereiche des erfindungsgemäßen Installationssystems können sich im Bereich der Beleuchtungs- oder der Jalousiesteuerung ergeben.

Weitere Einzelheiten, Merkmale und Vorteile der Erfindung ergeben sich aus nachfolgender Beschreibung eines bevorzugten Ausführungsbeispieles anhand der Zeichnungen.

Es zeigen:

Fig. 1 schematisch eine bekannte Schaltung,

Fig. 2 schematisch einen Ausschnitt einer erfindungsgemäßen Schaltung und

Fig. 3 schematisch einen Ausschnitt einer weiteren erfindungsgemäßen Schaltung.

Gleiche oder gleichwirkende Bauteile sind in der nachfolgenden Beschreibung mit gleichen Bezugszeichen versehen.

Nachfolgend werden der Aufbau und die Funktionsweise der erfindungsgemäßen elektrischen Schaltung schematisch anhand von Ausführungsbeispielen näher beschrieben.

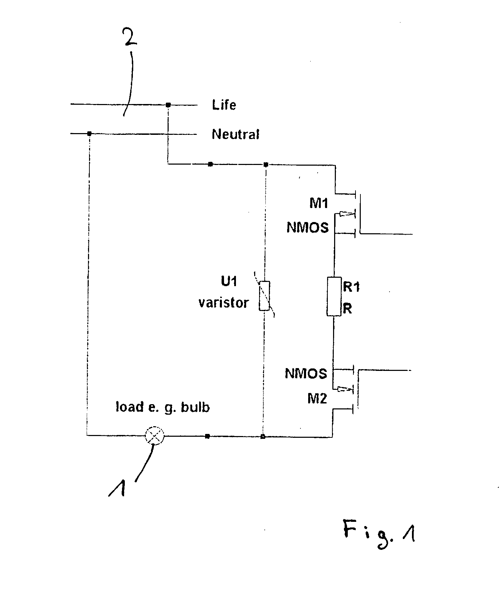

Die Schaltung dient zum Schalten und/oder Dimmen von Lasten 1, beispielsweise Glühbirnen und anderen Leuchtmitteln, an Wechselspannungsnetzen 2. Eine grundsätzliche Verschaltung als 2-Draht-Schalter (Dimmer und Last in Reihe) ist in Figur 1 dargestellt.

In Serie zur Last 1 liegt die Serienschaltung zweier Schaltelemente, in Form von Transistoren M1 und M2, und eines niederohmigen Fühlerwiderstandes R1, der ein Überspannungsschutzelement U1 in Form eines Varistors parallel geschaltet ist.

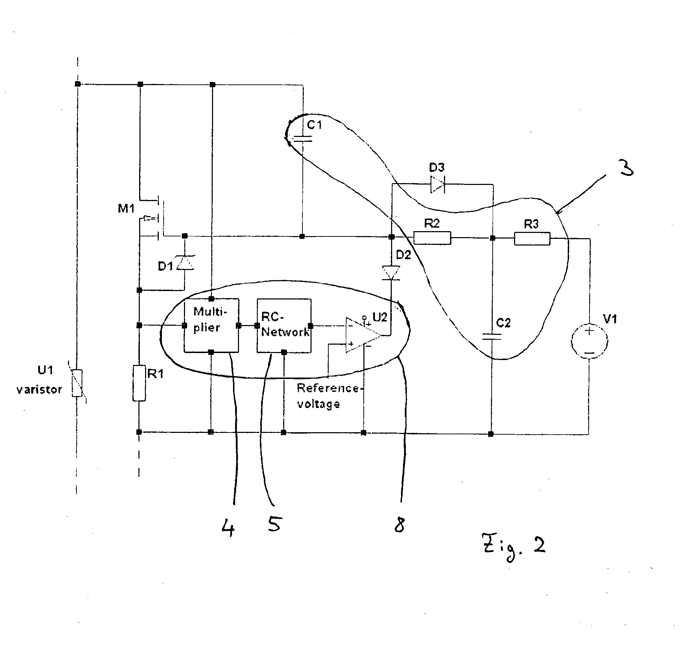

Da diese üblicherweise eingesetzte Schaltung bezüglich der beiden Transistoren M1 und M2 symmetrisch aufgebaut ist, wird in Figur 2 nur eine Hälfte der Schaltung (um Transistor M1) dargestellt, die für Transistor M2 sinngemäß gilt.

Die im Folgenden angegebene Beschaltung dient dazu, im Normalbetrieb die geforderten Kennwerte der Funkstörspannung zu erreichen und im gestörten Betrieb den Transistor M1 gegen Schädigung durch Überspannung, Überstrom, Kurzschluss usw. zu schützen.

Im Normalbetrieb wird das Gate des Transistors M1 mit V1 über ein erstes RC-Netzwerk 3 aus den Kondensatoren C1, C2 und den Widerständen R2, R3 so "langsam" angesteuert, dass eine reduzierte Flankensteilheit eines Schaltimpulses die Funkstörspannung unter die erlaubten Grenzwerte absenkt Dabei ist besonders der Kondensator C1 wichtig, der gemäß einer Miller-Beschaltung als Parallelkapazität zu der sehr stark spannungsabhängigen Gate-Drain-Strecke des Transistors M1 die Schwankung der Flankensteilheit reduzieren kann. Ein zusätzlicher Kondensator parallel zum Varistor U1, der voluminös ist und beim Schalten zusätzliche Verluste in den Transistoren M1, M2 erzeugt, wird somit überflüssig.

Zum Schutz des Transistors M1 im ausgeschalteten Zustand zeigt Figur 2 die üblichen Schutzelemente wie den Varistor U1, z. B. ein 275V-Typ für Verwendung bei einem 800V-Transistor am 230V Netz, und eine Schutzdiode D1, die die Gate-Source-Strecke gegen positive wie negative Spannungsspitzen schützt. Eine Diode D3 verhindert bei schnellen positiven Störflanken auf dem Wechselspannungsnetz 2 das Aufsteuern des Transistors M1 durch Klemmung auf den Kondensator C2.

Im eingeschalteten Zustand dient im Stand der Technik ein Stromfühlerwiderstand R1 in Verbindung mit einem Komparator zur Abschaltung des Transistors M1 bei Überschreitung eines Schwellwertes.

In Figur 2 wird jedoch der fortgeschriebene Mittelwert der auftretenden Verlustleistung (P=U*I) mit einem Multiplizierer 4 und einem zweiten RC-Netzwerk 5 gebildet, durch einen Komparator U2 mit einem Referenzwert verglichen und zum Abschalten des Transistors M1 benutzt. Durch dieses Schaltungsteil 8 bedingt, kann der Transistor M1 bei hohen Strömen und hoher Spannung mit resultierender hoher Verlustleistung schnellst möglich abgeschaltet werden. Hingegen ist bei hohen Strömen im bereits durchgeschalteten Transistor M1 mit niedriger Verlustleistung eine verlängerte Abschaltung akzeptabel. Das zweite RC-Netzwerk 5 bildet dabei den zeitlichen Verlauf des Impulswärmewiderstandes des Transistors M1 nach.

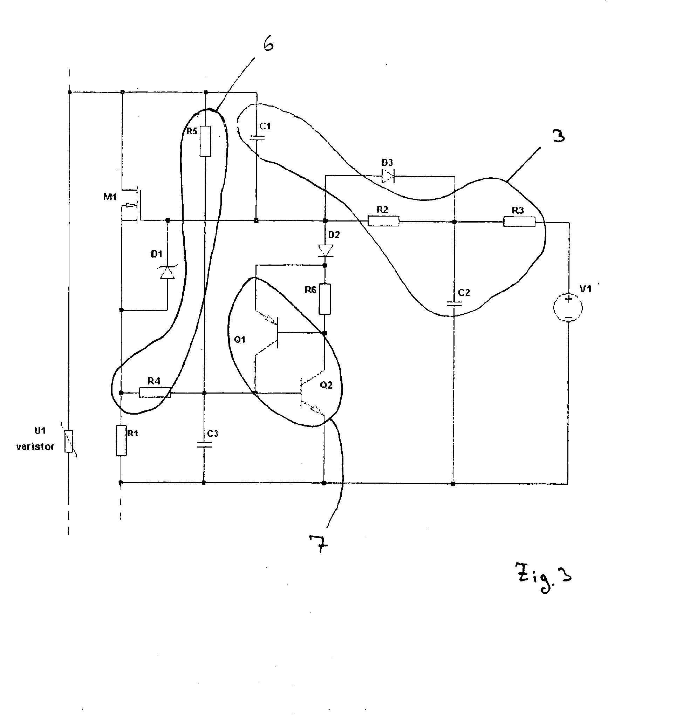

Im Falle eines Überstromes erfolgt eine Abschaltung bei Überschreitung eines Maximalstromes. Bei konstanter Verlustleistung darf bei bei geringen Spannungen natürlich der Maximalstrom nicht überschritten werden. Bei der Schaltung in Figur 3 wird der sichere Betrieb unterhalb des Maximalstromes durch einen linearen Zusammenhang angenähert. Vorteilhafterweise kann eine Annäherung der Abschaltbedingungen durch ein lineares Widerstands-Netzwerk 6 und einen zusätzlicher Schutz durch eine temperaturabhängige Abschaltschwelle erzeugt werden. Um den Aufwand bei der Hardware gering zu halten, wird die Nachbildung des Impulswärmewiderstandes auf die Modellierung der sehr kurzen Zeiten im Bereich einiger bis einiger hundert $\mu$s beschränkt.

In einem entsprechend ausgebildeten Schaltungsteil 8 wird die "Spannungsinformation" durch einen Spannungsteiler aus den Widerständen R4 und R5 erzeugt und zu der "Strominformation" am Widerstand R1 addiert und nach der Filterung durch einen Kondensator C3 der Komparator- und Triggerstufe 7 aus den Transistoren Q1 und Q2 zugeführt, die bei Überschreitung einer Basis-Emitter-Schwellspannung von etwa Ube=0.55V den Transistor M1 sperrt.

Damit gilt für den Drainstrom an der Abschaltschwelle:

$$Id = 1/R1 * (Ube - R4/R5 * Uds)$$

Wichtig ist die Möglichkeit, den Transistor M1 innerhalb von etwa 1$\mu$s abzuschalten, da die maximale Verlustleistung von 350V*30A, d. h. etwa 10kW, bei üblichen Transistortypen nicht länger zulässig ist. Übliche Abschaltungen über Komparatoren oder Prozessoren arbeiten hier zu langsam. Vorteilhaft ist die Temperaturabhängigkeit der Basis-Emitter-Schwellspannung, die die Abschaltung bei höheren Umgebungstemperaturen zu niedrigen Strömen hin verschiebt.

Die Abschaltung bleibt solange bestehen, wie die Kombination aus den Transistoren Q1 und Q2 leitend bleibt, also solange wie die Ansteuerung durch V1 vorhanden ist. Falls der Strom durch die Widerstände R2, R3 hierzu nicht ausreicht, kann er durch einen zusätzlichen Widerstand R6 von V1 zum Emitter von Transistor Q1 erhöht werden.

Um den Aufwand bei der Hardware gering zu halten, wird in Figur 3 die Nachbildung des Impulswärmewiderstandes durch den Kondensator C3 und die Widerstände R4, R5 auf die Modellierung der sehr kurzen Zeiten im Bereich einiger bis einiger hundert $\mu$s beschränkt. Obwohl der Transistor M1 bei fortbestehender Störung auch bei wiederholtem Einschalten gegen Zerstörung geschützt ist, steigt die mittlere Verlustleistung über die Verlustleistung im Normalbetrieb an, und der Transistor M1 sollte durch die übergeordnete Steuerung (Mikroprozessor des Dimmers) abgeschaltet bzw. mit einem größeren Tastverhältnis (z. B. alle 100ms) eingeschaltet werden.

**Bezugszeichenliste**

1 Last

2 Wechselspannungsnetz

3 erstes RC-Netzwerk

4 Multiplizierer

5 zweites RC-Netzwerk

6 Widerstands-Netzwerk

7 Komparator- und Triggerstufe

8 Schaltungsteil

C1 Kondensator

C2 Kondensator

C3 Kondensator

D1 Schutzdiode

D2 Diode

D3 Diode

M1 Schaltelement, Transistor

M2 Schaltelement, Transistor

Q1 Transistor

Q2 Transistor

R1 Stromfühlerwiderstand

R2 Widerstand

R3 Widerstand

R4    Widerstand

R5    Widerstand

R6    Widerstand

U1    Überspannungsschutzelement, Varistor

U2    Komparator

**Patentansprüche**

1.  Elektrische Schaltung zum Schalten und/oder Dimmen von Lasten (1) umfassend mindestens ein ansteuerbares elektronisches Schaltelement (M1, M2) in Form eines Transistors zur Erzeugung eines die Last (1) schaltenden Schaltsignals, das mit einer Spannungsversorgung (2) und einer Last (1) verbunden ist und das einen nutzerseitig veränderbaren Parameter zur Beeinflussung des die Last (1) schaltenden Schaltsignals aufweist, **dadurch gekennzeichnet, dass** die Schaltung ein erstes RC-Netzwerk (3) zur Dämpfung der Flankensteilheit des Schaltsignals aufweist, wobei das erste RC-Netzwerk (3) mit einem Kondensator (C1) parallel zu einer Gate-Drain-Strecke des Schaltelementes (M1, M2) angeordnet ist, und **dass** die Schaltung einen Schaltungsteil (8) zur Abschaltung des Schaltelementes (M1, M2) bei Überschreitung eines Schwellwertes aufweist, der eine schaltungstechnische Nachbildung des Impulswärmewiderstandes des Schaltelementes (M1, M2) umfasst und der einen Multiplizierer (4), ein zweites RC-Netzwerk (5) und einen Komparator (U2) aufweist.

2.  Elektrische Schaltung nach Patentanspruch 1, **dadurch gekennzeichnet, dass** das erste RC-Netzwerk (3) aus zwei Kapazitäten (C1, C2) und zwei Widerständen (R2, R3) besteht, die miteinander verschaltet sind.

3.  Elektrische Schaltung nach einem der vorhergehenden Patentansprüche, **dadurch gekennzeichnet, dass** in dem Multiplizierer (4) eine Spannungsinformation durch einen Widerstandsteiler erzeugt und mit einer Strominformation an einem ersten Widerstand (R1) multipliziert wird.

4.  Elektrische Schaltung nach einem der vorhergehenden Patentansprüche, **dadurch gekennzeichnet, dass** der Schaltungsteil (8) ein lineares Widerstandsnetzwerk (6) zur Annäherung von Abschaltbedingungen aufweist.

5.  Elektrische Schaltung nach Patentanspruch 4, **dadurch gekennzeichnet, dass** Informationen aus dem linearen Widerstandsnetzwerk (6) nach der Filterung durch einen Kondensator (C3) einer Komparator- und Triggerstufe (7) zugeführt werden und bei Überschreitung einer Schwellspannung den Transistor (M1, M2) sperren.

6.  Elektrische Schaltung nach einem der vorhergehenden Patentansprüche, **dadurch gekennzeichnet, dass** das Schaltelement (M1, M2) durch eine übergeordnete Steuerung (Mikroprozessor des Dimmers) abschaltbar oder mit einem größeren Tastverhältnis einschaltbar ist.

7.  Elektrische Schaltung nach einem der vorhergehenden Patentansprüche, **dadurch gekennzeichnet, dass** die Schaltung für eine Beleuchtungs- oder eine Jalousiesteuerung einsetzbar ist.

**Claims**

1.  Electrical circuit for switching and/or dimming loads (1), comprising at least one driveable electronic switching element (M1, M2) in the form of a transistor for generating a switching signal switching the load (1), which driveable electronic switching element is connected to a voltage supply (2) and a load (1) and has a user-variable parameter for influencing the switching signal switching the load (1), **characterized in that** the circuit has a first RC network (3) for damping the edge steepness of the switching signal, wherein the first RC network (3) is arranged with a capacitor (C1) in parallel with a gate-drain path of the switching element (M1, M2), and **in that** the circuit has a circuit part (8) for disconnecting the switching element (M1, M2) in the event that a threshold value is exceeded, which circuit part comprises simulation, in terms of circuitry, of the thermal impedance under pulse conditions of the switching element (M1, M2) and has a multiplier (4), a second RC network (5) and a comparator (U2).

2.  Electrical circuit according to Patent Claim 1, **characterized in that** the first RC network (3) comprises two capacitances (C1, C2) and two resistors (R2, R3), which are connected to one another.

3.  Electrical circuit according to either of the preceding patent claims, **characterized in that**, in the multiplier (4), voltage information is generated by a resistive divider and is multiplied by current information at a first resistor (R1).

4.  Electrical circuit according to one of the preceding patent claims, **characterized in that** the circuit part (8) has a linear resistor network (6) for approximating disconnection conditions.

5.  Electrical circuit according to Patent Claim 4, **char-

**acterized in that** information is supplied from the linear resistor network (6) after filtering by a capacitor (C3) to a comparator and trigger stage (7) and, in the event that a threshold voltage is exceeded, turns off the transistor (M1, M2).

6. Electrical circuit according to one of the preceding patent claims, **characterized in that** the switching element (M1, M2) is disconnectable by means of a superordinate controller (microprocessor of the dimmer) or can be switched on at a higher duty factor.

7. Electrical circuit according to one of the preceding patent claims, **characterized in that** the circuit can be used for lighting or blind control.

**Revendications**

1. Circuit électrique pour commuter et/ou atténuer des charges (1), comprenant au moins un élément de commutation électronique commandable (M1, M2) sous la forme d'un transistor pour générer un signal de commutation qui commute la charge (1), lequel est relié avec une source de tension (2) et une charge (1) et qui présente un paramètre modifiable par l'utilisateur pour influencer le signal de commutation qui commute la charge (1), **caractérisé en ce que** le circuit présente un premier réseau RC (3) pour atténuer la pente de signal du signal de commutation, le premier réseau RC (3) étant disposé avec un condensateur (C1) en parallèle avec une branche gâchette-drain de l'élément de commutation (M1, M2), et **en ce que** le circuit présente une partie de commutation (8) pour déconnecter l'élément de commutation (M1, M2) en cas de dépassement d'une valeur de seuil, laquelle inclut une simulation par technique de branchement de la résistivité thermique impulsionnelle de l'élément de commutation (M1, M2) et présente un multiplicateur (4), un deuxième réseau RC (5) et un comparateur (U2).

2. Circuit électrique selon la revendication 1, **caractérisé en ce que** le premier réseau RC (3) se compose de deux condensateurs (C1, C2) et de deux résistances (R2, R3) qui sont interconnectés entre eux.

3. Circuit électrique selon l'une des revendications précédentes, **caractérisé en ce qu'**une information de tension est générée dans le multiplicateur (4) par un diviseur de tension et multipliée par une information de courant sur une première résistance (R1).

4. Circuit électrique selon l'une des revendications précédentes, **caractérisé en ce que** la partie de commutation (8) présente un réseau résistif linéaire (6) destiné à se rapprocher des conditions de déconnexion.

5. Circuit électrique selon la revendication 4, **caractérisé en ce que** les informations issues du réseau résistif linéaire (6), après le filtrage par un condensateur (C3), sont acheminées à un étage de comparaison et de déclenchement (7) et bloquent le transistor (M1, M2) en cas de dépassement d'une tension de seuil.

6. Circuit électrique selon l'une des revendications précédentes, **caractérisé en ce que** l'élément de commutation (M1, M2) peut être déconnecté par une commande de supervision (microprocesseur du gradateur) ou peut être mis en circuit avec un rapport cyclique plus élevé.

7. Circuit électrique selon l'une des revendications précédentes, **caractérisé en ce que** le circuit peut être utilisé pour une commande d'éclairage ou une commande de store.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19538368 C1